# EUROPEAN PATENT APPLICATION

(11) **EP 1 589 741 A2**
(43) Date of publication of application: **26.10.2005**
(21) Application number: 05102025.3
(22) Date of filing: 15.03.2005
(51) Int. Cl.: H04M 17/00

(54) **Method for billing pre-paid multi-services**

(30) Priority: 23.04.2004 EP 04368033
(71) Applicant: International Business Machines Corporation, Armonk, N.Y. 10504 (US)
(72) Inventor: Chevalier, Denis, 06480 La Colle sur Loup (FR)
(74) Representative: Therias, Philippe

(57) **Abstract**

Method for computing a quota of service time or service volume requested by a user (10) in a system wherein a service provider (12) is adapted to provide a plurality of services to the user having pre-paid an amount of money on a user account in order to access at least one service. This method comprises the steps of determining whether the product of the amount of money (AMOUNT) by a reserved part (PART) is greater than a predetermined minimum reserve of money (MIN-RESERVE), and computing the quota which is equal to the minimum (MIN1) of the product and a maximum quantity of service (MAX-FLAT) that the user may reserve while being in a flat rate interval divided by the cost of one unit of the requested service (RATE) if the product is greater than said predetermined minimum reserve of money or to the minimum (MIN2) of the amount of money, the maximum quantity of service and the minimum reserve of money, divided by the cost of one unit of the requested service (RATE) if the product is less than the minimum reserve of money.

## Description

### Technical field

The invention relates to the reservation of an amount of money on the account of a user requesting a service to a service provider and in particular relates to a method of computing a quota of service requested by a pre-paid user to a multi-service provider.

### Background

Today, the service providers on a data transmission network want to offer their customers data and content services such as Internet access, location services, content services (news, real time football results), ring tones, game download, etc. Such data services may be charged on time (Internet access), on volume (download), or on content (ring tone, sport result). A customer may be accessing multiple services at the same time. For example, he may be surfing on the Internet network and, at the same time, using his mobile telephone.

Existing customers of voice only services in the market place can be either pre-paid customers or post-paid customers. Both categories have a single account in the pre-paid or post-paid billing engine. The operators require the capability to bill their customers for multiple voice and data service access on the customer single account. Billing engines are in most cases complex, monolithic and critical for the operator business.

Existing post-paid billing engines can handle multiple accesses for the same user as the processing is performed via batch processes. The issue that operators face is only in the definition of new data services for which the existing post paid billing engines have not been designed.

But, existing real time pre-paid billing engines (also called IN standing for Intelligent Network) have been designed to handle voice services that are charged on time with no capability of parallelism and no capability of volume charging. One solution to extend the operation of such a pre-paid billing engine to other services than voice services would be using a new real time pre-paid engine to replace the existing one or to integrate this engine with an existing one. This is generally a heavy investment and operators are looking for a cheaper solution as the data usage in their view will represent a small part (about 10%) of their revenue compared to voice services.

### Summary of the invention

Accordingly, the general object of the invention is to achieve a method offering the capability to bill a pre-paid user with a single pre-paid account when this user requests the access in parallel to voice services and multiple data services.

Another object of the invention is to achive a method for computing a quota of service requested by a user having a single pre-paid account to a multi-service provider by only adding a new functionality allowing to manage in parallel several data accesses that are charged in time, volume and content.

The invention therefore relates to a method for computing a quota of service time or service volume requested by a user in a system wherein a service provider is adapted to provide a plurality of services to the user having an amount of money on a pre-paid user account in order to access (at least) one service provided by the service provider. This method comprises the steps of determining whether the product of the amount of money (AMOUNT) by a part (PART) corresponding to the percentage of money reserved to allow fairness between the plurality of services provided by the service provider is greater than a predetermined minimum reserve of money (MIN-RESERVE), and computing the quota which is equal to the minimum (MIN1) of the product and a maximum quantity of service (MAX-FLAT) that the user may reserve while being in a flat rate interval divided by the cost of one unit of the requested service (RATE) if the product is greater than the predetermined minimum reserve of money or to the minimum (MIN2) of the amount of money, the maximum quantity of service (MAX-FLAT) and the minimum reserve of money divided by the cost of one unit of the requested service (RATE), if the product is less than the minimum reserve of money.

### Brief description of the drawings

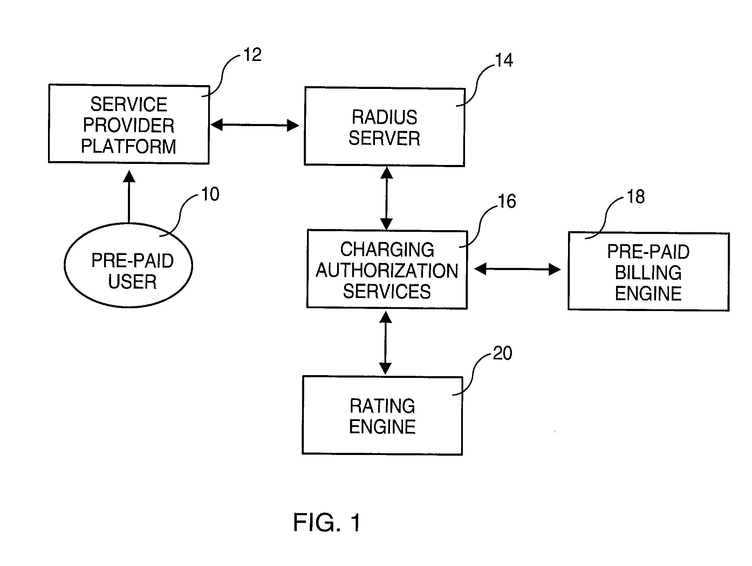

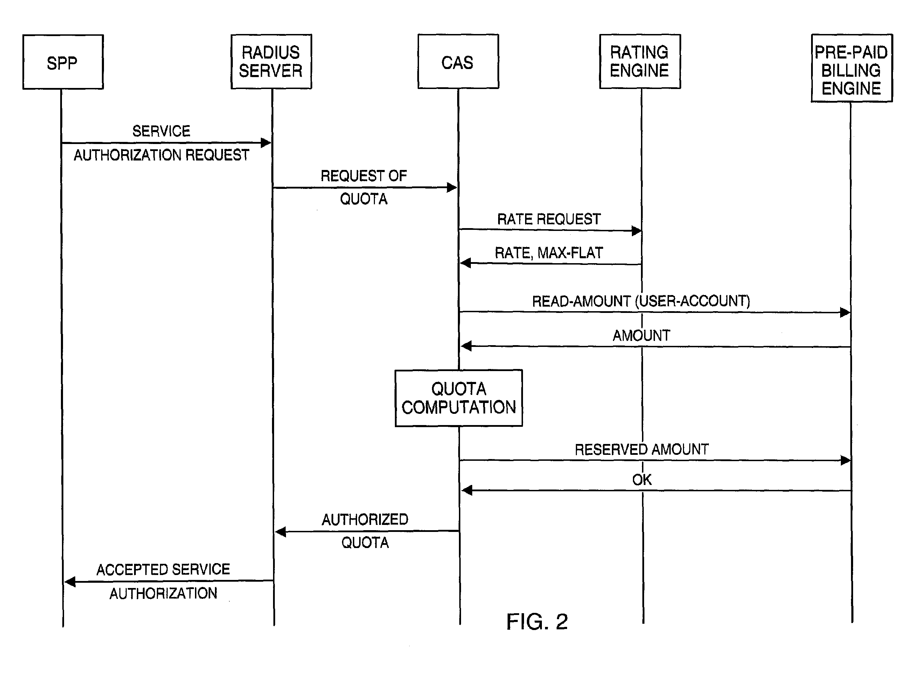

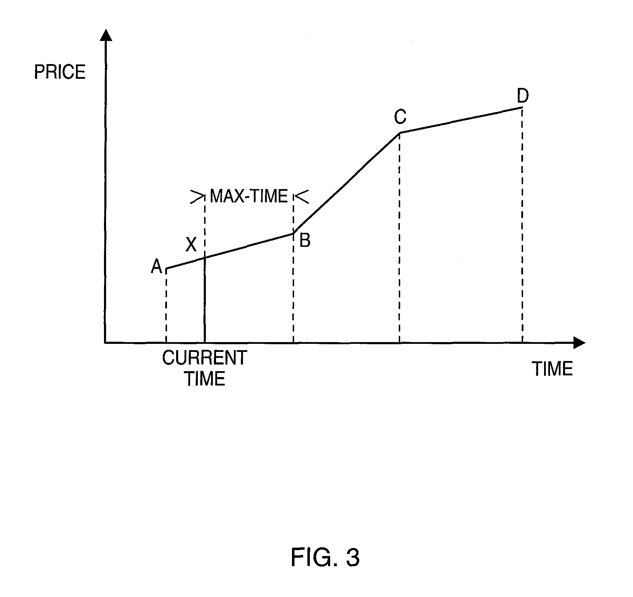

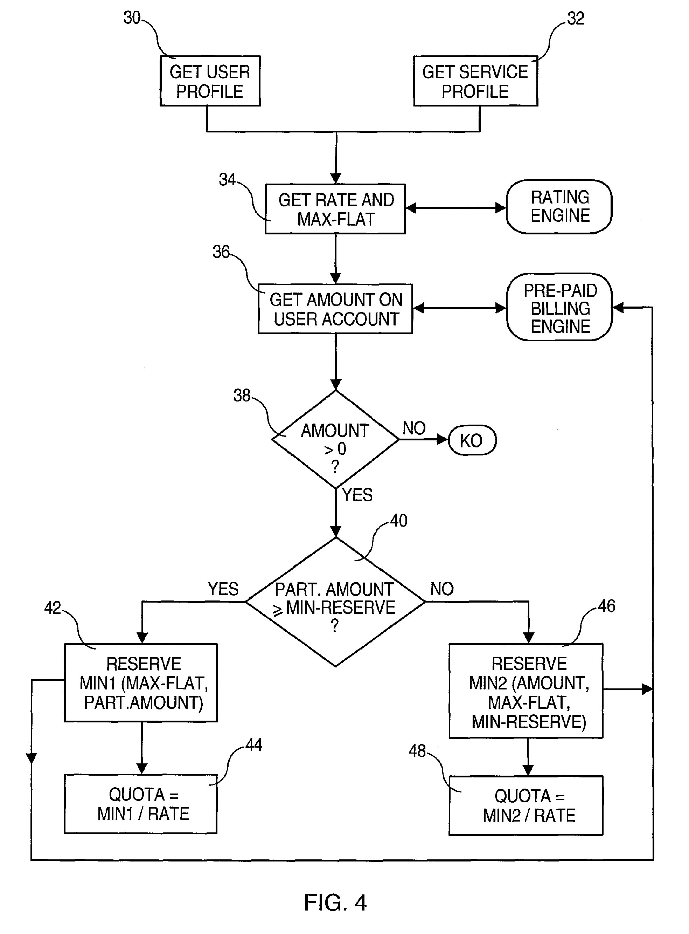

The above and other objects, features and advantages of the invention will be better understood by reading the following more particular description of the invention in conjunction with the accompanying drawings wherein:
■ FIG. 1 is a block-diagram representing a system implementing the method according to the invention;
■ FIG. 2 is a time-diagram representing the sequential communications which are performed between the components of the system illustrated in Fig. 1;
■ FIG. 3 is a diagram representing the price of a service with respect to the time according to a sequence of flat rates ; and
■ FIG. 4 is a flow chart representing the steps of the method according to the invention.

### Detailed description of the invention

A system wherein the method according to the invention is implemented is illustrated in FIG. 1. It is assumed that a pre-paid user can gain access to a plurality of services provided by a service provider represented by a service provider platform 12. Note that in such a platform, an AAA component is in charge of Authentication, Authorization and Accounting. It is only recently that the authorization function has been enhanced to handle pre-paid users.

Upon a request from the user, a Radius (Remote Authentication Dial-in User Service) server 14 receives from the service provider platform 12 the authorization request to provide the requested service. Note that the communication with the Radius server is by means of a Radius protocol. Generally, the Radius server performs centralized connection authentication, authorization and accounting for many types of network accesses including wireless, authenticating switch dial-up and virtual private network (VPN) remote access, and router-to-router connections.

The heart of the invention is a new software component: Charging Authorization Services (CAS), which is in charge of computing the authorized quota of requested service and reserving the corresponding amount of money on the user account in a pre-paid billing engine. For computing such a quota, CAS 16 needs to know the rate of the service and a maximum quantity of service called Max-Flat which are provided by a rating engine 20.

As illustrated in FIG.2, the method starts by the service provider platform SPP submitting a service authorization request to the radius server which requests the computation of the quota that is the amount of time or volume allowed for this service to the CAS. Then, the CAS interfaces the rating engine (rate request) to get the service rate and the MAX-FLAT and interfaces the pre-paid billing engine (READ-AMOUNT) to get the amount of money on the user account (USER-ACCOUNT) that is free and potentially several reserved amounts that are not free. After computation of the quota, as explained hereafter, an amount of money corresponding to the quota is reserved in the user account, the authorized quota is returned to the radius server which sends an accepted service authorization to the SPP.

The rate (RATE) that is provided by the rating engine is the price of one unit of time or volume for using the service. Assuming that the price is a function of the time as illustrated in FIG.3, there are various intervals of time with different rates such as AB, BC and CD. The rate which is returned by the rating engine is the rate corresponding to the current time. The value MAX-FLAT is the amount of money equivalent to the maximum quantity of time that the user can spend while being in a flat rate interval. In FIG.3, it is the quantity of time between point X corresponding to the current time and point B. It must be noted that the rules are the same if the price of the service is a function of the volume instead of time.

For the computation of the quota represented by the flow chart of FIG.4, the CAS has to get the user profile (step 30) and to get the profile of the requested service (step 32) which are provided by the service provider platform through the radius server. Then, the CAS gets the rate to be used and MAX-FLAT from the rating engine (step 34), and gets the available amount on the user account from the pre-paid billing engine (step 36). It is checked whether this amount is greater than 0 (step 38). If not, the CAS returns a negative answer and the process is stopped.

Before going further, it is necessary to define the criteria which are to be met.
1. The quota must be less than the value MAX-FLAT because the service provider platform only knows how to manage a quota of time or volume in a flat rate interval.
2. The quota is a part of the available amount of money, that is a percentage of the amount of free money on the account of the user that should be normally reserved to allow fairness between multiple services access and to avoid a performance problem. This percentage is small for services that are cheap and high for services that are expensive (the goal is to reserve a greater amount of money for expensive services). Note that the part could be defined at system level as a unique percentage for all services, but could be also defined by service as a variable percentage according to the quantity of free money on the user account.
3. The quota must be greater than a value defined by the operator for each service called here MIN-RESERVE. This avoids too many requests to the pre-paid billing engine when the pre-paid account becomes small.
4. If there is not enough money according to the previous rules, the quota to be reserved corresponds to the total amount of money in the account.

Taking the above criteria into account, it is then checked whether the product of PART as defined above and AMOUNT representing the amount of money on the user account is greater than or equal to MIN-RESERVE (step 40). If so, the quantity of money to be reserved with the pre-paid billing engine is determined as being the minimum (MIN1) of PART.AMOUNT and MAX-FLAT (step 42) and the quota is defined as being the value MIN1 divided by the rate RATE (step 44). Otherwise, the quantity of money to be reserved with the pre-paid billing engine is determined as being the minimum (MIN2) of AMOUNT, MAX-FLAT and MIN-RESERVE (step 46) and the quota is defined as being the value of MIN2 divided by the rate RATE (step 48).

## Claims

1. Method for computing a quota of service time or service volume requested by a user (10) in a system wherein a service provider (12) is adapted to provide a plurality of services to said user having pre-paid an amount of money on a user account in order to access at least one service provided by said service provider ;
said method being **characterized by** the following steps:
- determining whether the product of said amount of money (AMOUNT) by a part (PART) corresponding to the percentage of money reserved to allow fairness between said plurality of services provided by said service provider is greater than a predetermined minimum reserve of money (MIN-RESERVE), and
- computing said quota which is equal either to the minimum (MIN1) of said product and a maximum quantity of service (MAX-FLAT) that said user may reserve while being in a flat rate interval divided by the cost of one unit of said requested service (RATE) if said product is greater than said predetermined minimum reserve of money or to the minimum (MIN2) of said amount of money, said maximum quantity of service and said minimum reserve of money, divided by the cost of one unit of said requested service if said product is less than said minimum reserve of money.

2. Method according to claim 1, wherein said quota is computed by a Charging Authorization Services (CAS) component (16).

3. Method according to claim 2, wherein said maximum quantity of service (MAX-FLAT) that said user (10) may reserve and said cost of one unit of the requested service (RATE) are provided by a rating engine (20).

4. Method according to claim 2 or 3, wherein said amount of money (AMOUNT) is provided by a pre-paid billing engine (18) storing the user account.

5. Method according to claim 4, wherein said minimum (MIN1 or MIN2) corresponds to the amount of money to be reserved with said pre-paid billing engine (18).

6. System for computing a quota of service time or service volume requested by a user (10) wherein a service provider (12) is adapted to provide a plurality of services to said user having an amount of money on a pre-paid user account in order to access to at least one service provided by said service provider;
Said system being **characterized in that** it comprises Charging Authorization Services (CAS) (16) in charge of computing said quota, said CAS including means for determining whether the product of said amount of money (AMOUNT) by a part (PART) corresponding to the percentage of money reserved to allow fairness between said plurality of services provided by said service provider is greater than a predetermined minimum of reserve of money (MIN-RESERVE), and computing said quota which is equal to the minimum (MIN1) of said product and a maximum quantity of service (MAX-FLAT) that said user may reserve while being in a flat rate interval divided by the cost of one unit of said requested service (RATE) if said product is greater than said predetermined minimum reserve of money or to the minimum (MIN2) of said amount of money, said maximum quantity of service and said minimum reserve of money, divided by the cost of one unit of said requested service if said product is less than said minimum reserve of money.

7. System according to claim 6, further comprising a rating engine (20) adapted for providing to said CAS (16) said maximum quantity of money (MAX-FLAT) that said user (10) may reserve and said cost of one unit of the requested service (RATE).

8. System according to claim 6 or 7, further comprising a pre-paid billing engine (18) for storing the user account and providing said amount of money (AMOUNT) to said CAS (16).

9. System according to claim 8, wherein said minimum (MIN1 or MIN2) corresponds to the amount of money to be reserved with said pre-paid billing engine (18).
